# EUROPÄISCHE PATENTSCHRIFT

(11) **EP 2 244 320 B1**
(45) Veröffentlichungstag und Bekanntmachung des Hinweises auf die Patenterteilung: **14.03.2012**
(21) Anmeldenummer: 10172370.8
(22) Anmeldetag: 24.04.2002
(51) Int. Cl.: H01M 2/30, H01M 10/12

(54) **Endpol für den Anschluss elektrischer Polverbinder für Batterien**
Terminal pin for the connection of electrical terminal connector for batteries
Borne terminale pour la connection de connecteurs electriques pour batteries

(43) Veröffentlichungstag der Anmeldung: 27.10.2010
(62) Teilanmeldung aus: 02009201.1
(73) Patentinhaber: JL Goslar GmbH & Co. KG, 38640 Goslar (DE)
(72) Erfinder: Krüsemer, Rolf, 52335, Düren (DE)
(74) Vertreter: Richter Werdermann Gerbaulet Hofmann

(56) Entgegenhaltungen:
- EP-A- 0 261 311
- DE-A1- 4 138 760
- DE-C1- 19 936 797
- US-A- 1 484 481
- US-A- 3 256 511
- US-A- 4 212 934

## Beschreibung

Die Erfindung betrifft einen Endpol für den Anschluss elektrischer Polverbinder für Batterien gemäß dem Oberbegriff des Anspruches 1.

Leistungsstarke Batterien und Akkumulatoren, stationäre Batterien weisen im Prinzip den gleichen Aufbau auf und werden in Straßenfahrzeugen und Flurförderzeugen eingesetzt. Neben Blei- und Säurebatterien sind Nickel-Batteriesysteme, Natrium-Batteriesysteme und Lithium-Batteriesysteme bekannt. Das Grundelement einer Kraftfahrzeugbatterie ist beispielsweise die Bleizelle, ein galvanisches Element, die sich aus einer größeren Anzahl positiver und negativer Platten zusammensetzt, die aus Blei und Bleiverbindungen bestehen. Statt einfacher Platten werden oftmals Gitterplatten mit einem Gitter aus hochwertigen Hartbleilegierungen eingesetzt, in das die aktive Masse eingepresst ist. Positive Platten und negative Platten unterscheiden sich dabei durch die Gitterform und die Art der aktiven Massen. Beide Plattensätze werden, um einen Plattenschluss zu vermeiden, durch Separatoren (Trennwände) aus säurefestem Material in einen bestimmten Abstand gehalten, um ein Kurzschließen durch Materialwandungen zu verhindern. Die gesamte Anordnung erfolgt in einem Blockkasten. Mit den positiven Platten und den negativen Platten verbundene Endpole dienen für den Anschluss elektrischer Polverbinder.

Das Dokument DE 41 38 760 A1 offenbart dabei ein Herstellungsverfahren für einen Formkörper, insbesondere für Batteriepole, bei dem der Formkörper einen Grundkörper aufweist, der mit einem Teilkörper drehfest verbunden ist, wobei der Grund- und der Teilkörper aus Nicht-Eisen-Metall oder der eine Körper aus einem Nicht-Eisen-Metall und der andere Körper aus Eisen bzw. Stahl besteht. Dabei werden der Grund- und der Teilkörper als Grund- und Teilkörperrohling in eine dem Formkörper entsprechende Pressform eingebracht. Zudem ist der Teilkörperrohling zumindest in einem Einschubbereich in eine dem Einschubbereich entsprechende Öffnung des Grundkörperrohlings eingebracht. Unter Druckaufwendung in der Pressform werden die beiden Rohlinge dann zu einem Grundkörper verpresst. Die beiden Rohlinge können dabei entweder im kalten oder im warmen Zustand verpresst werden.

Aufgabe der vorliegenden Erfindung ist es, einen Endpol für den Anschluss elektrischer Polverbinder für Batterien zu schaffen, nach dem der Endpol an seinem freien Ende mit einer ein Innengewinde aufweisenden Bohrung versehen ist, die in Form einer homogen in das Endpol-Material eingebundenen Gewindehülse erhalten wird.

Gelöst wird diese Aufgabe bei einem Endpol für den Anschluss elektrischer Polverbinder für Batterien entsprechend der eingangs beschriebenen Art mit den im Anspruch 1 angegebenen Merkmalen.

Hiernach besteht die Erfindung in einem Endpol aus einem in etwa zylindrischen Formkörper aus Blei mit einendseitiger Anformung für die Befestigung von positiven Platten oder negativen Platten und mit einer am freien Formkörperende angeordneten mit einem Innengewinde versehenen Hülse aus Stahl oder einem anderen geeigneten Material, die bei der Herstellung des Formkörpers im Kaltpressverfahren einer Pb-Platine in einer Hohlform homogen in das Material des geformten Formkörpers eingebunden ist.

Hergestellt können dieser Endpoledadurch, dass in dem oberen Bereich eines der Form des Endpols entsprechenden, bodenseitig offenen Hohlraumes einer ein- oder mehrteiligen Hohlform eine mit einem Innengewinde versehene Hülse aus Stahl oder einem anderen geeigneten Material eingesetzt, hierauf vermittels eines unter Druck stehenden Pressstempels das Material einer Pb-Platine in einer dem herzustellenden Formkörper entsprechenden Materialmenge in den Hohlraum der Hohlform im Kaltpressverfahren bei gleichzeitiger homogenen Einbindung der Gewindehülse in das Pb-Material des Formkörpers gepresst und danach der Formkörper mit seiner homogen in das Pb-Material eingebundenen Gewindehülse der Hohlform entnommen wird.

Überraschend hat es sich gezeigt, dass durch Kaltformung vermittels Kaltpressen die Gewindehülse in das Pb-Material des Endpols homogen eingebunden wird, so dass die Gewindehülse fester, integrierter Bestandteil des Endpols wird. Die physikalischen und chemischen Eigenschaften des Bleis ermöglichen diese homogene Einbindung der Gewindehülse in das Pb-Material, aus dem der Endpol besteht im Kaltpressverfahren, so dass ein homogener, fester Verbund zwischen dem Material der Gewindehülse und dem Material des Endpols erreicht wird.

Weitere vorteilhafte Ausgestaltungen der Erfindung sind Gegenstand der Unteransprüche.

So besteht z. B. die Möglichkeit, die Gewindehülse für den Anschluss elektrischer Polverbinder bei der Herstellung des Endpols in den Hohlraum der Hohlform anzuordnen, so dass dann durch das Kaltpressen des Blei-Materials die Gewindehülse in das Bleimaterial homogen eingebunden wird. Darüberhinaus besteht jedoch auch die Möglichkeit, die Gewindehülse zusammen mit dem Blei-Material in den Hohlraum der Hohlform zu pressen, so dass dann bei diesem Vorgang die Einbindung der Gewindehülse in das Material des Endpols erfolgt.

Die Erfindung wird nachstehend anhand von Ausführungsbeispielen näher erläutert. Es zeigen:
- Fig. 1: in einer schaubildlichen Ansicht eine Batterie mit aus dem Blockkasten der Batterie herausragenden Endpolen,
- Fig. 2: eine schaubildliche Ansicht eines Endpols mit in das Endpol- Material homogen eingebundener Gewindehülse,
- Fig. 3: eine Seitenansicht des Endpols gemäß Fig. 2,
- Fig. 4: eine Ansicht von unten auf den Endpol gemäß Fig. 2,
- Fig. 5: eine Ansicht von oben auf den Endpol gemäß Fig. 2,
- Fig. 6: eine schaubildliche Ansicht einer weiteren Ausführungsform eines Endpols mit in das Endpol-Material homogen einge- bundener Gewindehülse und mit einer Kunststoffummante- lung,
- Fig. 7: eine Seitenansicht des Endpols gemäß Fig. 6,
- Fig. 8: eine Ansicht von unten auf den Endpol gemäß Fig. 6,
- Fig. 9: eine Ansicht von oben auf den Endpol gemäß Fig. 6,
- Fig. 10: einen senkrechten Schnitt durch eine Hohlform mit einem der Form des zu erstellenden Endpols entsprechenden Hohl- raum mit im oberen Bereich eingesetzter Gewindehülse, ei- nem Pressstempel und einer Pb-Platine vor dem Einpressen des Blei-Materials in den Hohlraum der Hohlform,
- Fig. 11: einen senkrechten Schnitt durch die Hohlform gemäß Fig. 10, jedoch mit in den Hohlraum der Hohlform teilweise ein- gepresstem Blei-Material,
- Fig. 12: einen senkrechten Schnitt durch die Hohlform gemäß Fig. 10 mit in den Hohlraum eingepresstem Blei-Material bei gleich- zeitiger homogener Einbindung der Gewindehülse in das Blei-Material,
- Fig. 13: einen senkrechten Schnitt durch die Hohlform gemäß Fig. 10 mit fertig hergestelltem Endpol vor dem Öffnen der Hohlform,
- Fig. 14: einen senkrechten Schnitt durch eine Hohlform mit einem der Form des zu erstellenden Endpols entsprechenden Hohl- raum mit auf die Pb-Platine aufgesetzter Gewindehülse vor dem Einpressen des Blei-Materials zusammen mit der Ge- windehülse in dem Hohlraum der Hohlform,
- Fig. 15: einen senkrechten Schnitt der in das Blei-Material des Endpols homogen eingebundenen Gewindehülse und
- Fig. 16: einen senkrechten Schnitt durch die Gewindehülse mit einer Außenwandaufrauhung bei erfolgter homogenen Einbindung der Gewindehülse in das Blei-Material des Endpols.

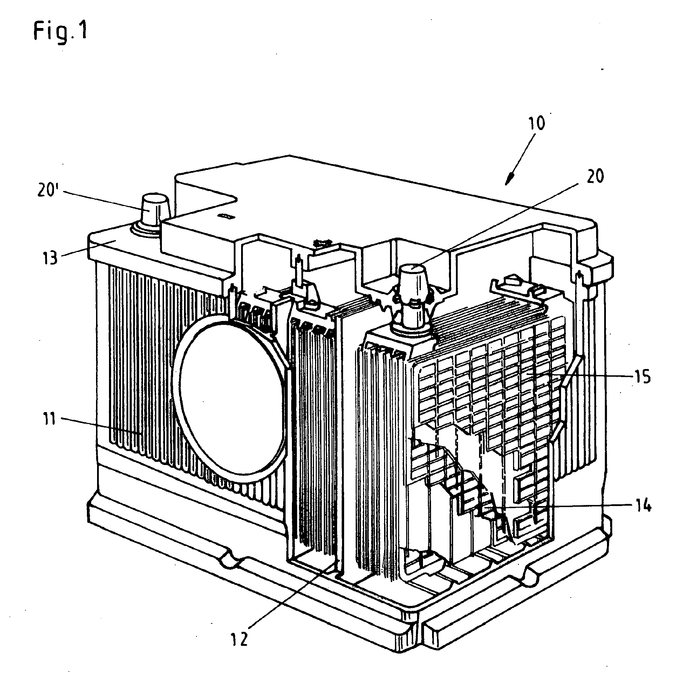

Fig. 1 zeigt eine herkömmliche Batterie 10, die aus einem Blockkasten 11 besteht, der mit einem oberen Blockdeckel 13 versehen ist. Der Innenraum, d. h. die Zelle des Blockkastens, ist unterteilt durch Zelltrennwände 12 zur Aufnahme von Plus-Platten 14 und Negativ-Platten 15, wobei die Plus-Platten und die Negativ-Platten über Polbrücken miteinander verbunden sind, die mit Endpolen 20, 20' verbunden sind.

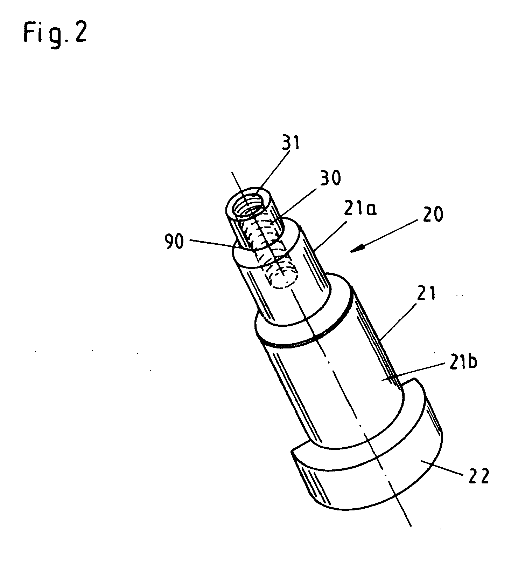

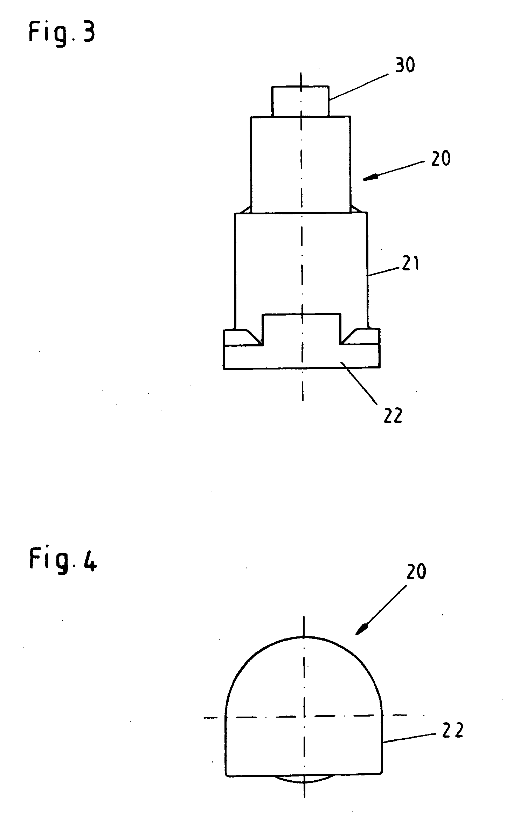

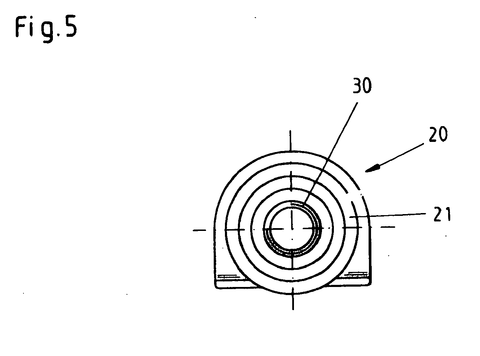

Der in den Fig. 2 bis 5 dargestellte Endpol 20 besteht aus einem in etwa zylindrischen Formkörper 21 aus einem Blei-Material. Das obere Ende des Formkörpers 21 ist mit 21a und das untere Ende mit 21b bezeichnet. An das untere Ende 21b des Formkörpers 21 ist eine Anformung 22 vorgesehen, über die dann die Negativ-Platten oder die Plus-Platten angeschlossen werden. Das obere Ende 21a des Formkörpers 21 weist eine in das Blei-Material des Endpols 20 eingearbeitete Gewindehülse 30 auf, die mit einem Innengewinde 31 versehen ist und aus Stahl besteht. Der Formkörper 21 des Endpols 20 entsprechend Fig. 2 bis 5 weist stufenweise sich verbreiternde Formkörperabschnitte auf.

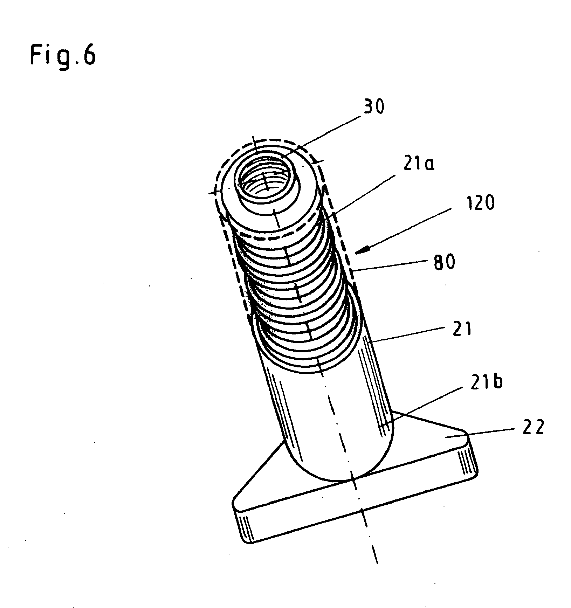

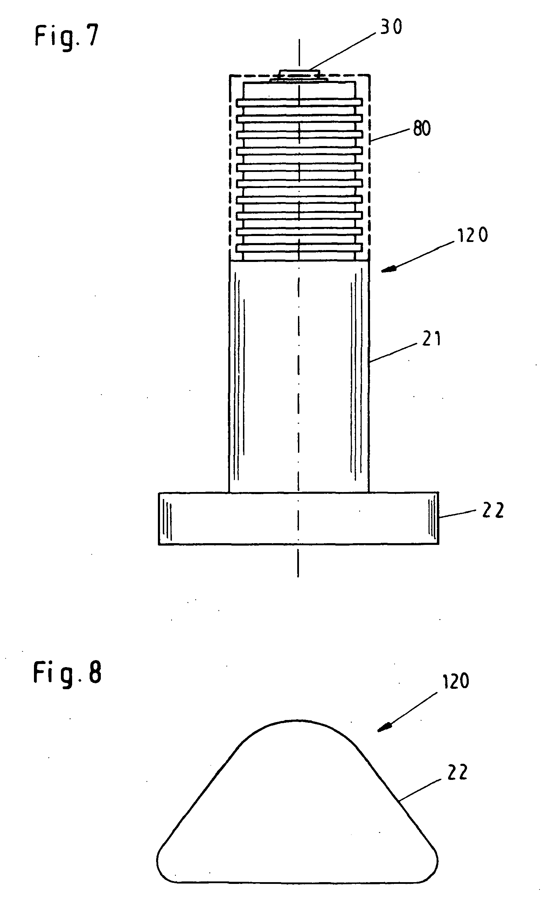

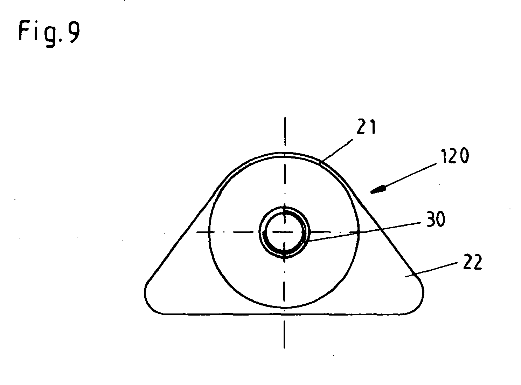

Bei der Ausführungsform eines Endpols 120 entsprechend der Fig. 6 bis 9 besteht der Endpol aus einem zylindrischen Formkörper der beispielsweise in seinem oberen Abschnitt mit einer außenwandseitig ausgebildeten Rillenstruktur versehen ist. Außerdem ist der Formkörper mit einem Kunststoffmantel 80 versehen. Auch dieser Endpol 120 weist in seinem oberen Bereich eine in das Blei-Material des Endpols eingelassene Gewindehülse 30 aus Stahl auf.

Die Gewindehülse 30 mit dem Innengewinde 31 ist bei der Herstellung des Endpols in das Blei-Material des Endpols homogen eingebunden. Die Herstellung des Endpols 20 bzw. 120 erfolgt dabei im Kaltpressverfahren.

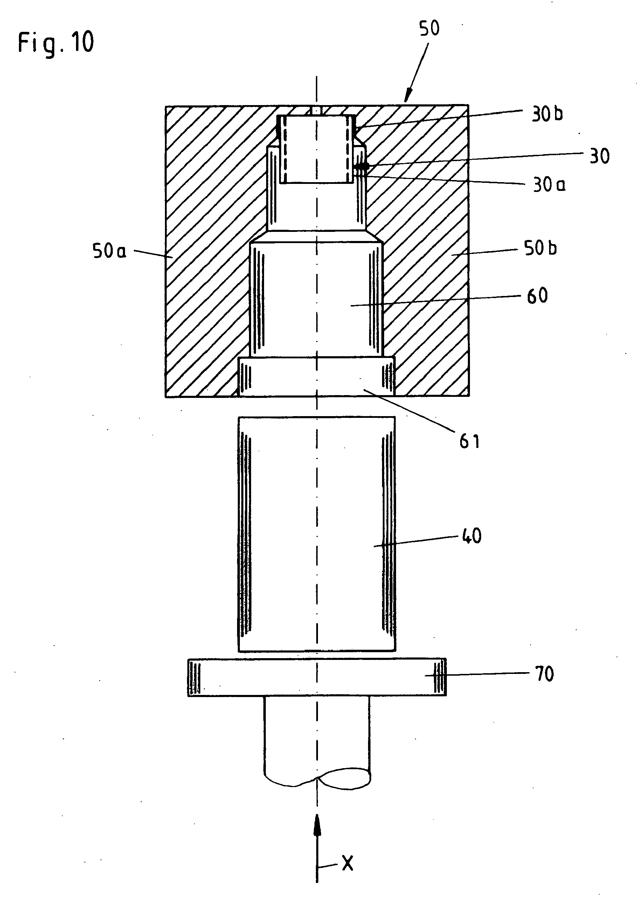

Die Fig. 10, 11, 12, 13 zeigen verschiedene Verfahrensschritte für die Herstellung des Endpols 20 aus einem Blei-Material. Hierbei wird ausgegangen von einer Hohlform 50 die einteilig oder mehrteilig ausgebildet sein kann. Im dargestellten Ausführungsbeispiel ist die Hohlform 50 zweiteilig ausgebildet und besteht aus den beiden Hohlformteilen 50a, 50b. In der Hohlform 50 ist ein Hohlraum 60 ausgebildet, der der Form des herzustellenden Endpols 20 entspricht. Dieser Hohlraum 60 ist bodenseitig offen ausgebildet. Die bodenseitige Öffnung ist bei 61 angedeutet.

In dem oberen Bereich des Hohlraumes 60 der Hohlform 50 ist eine Gewindehülse 30 mit einem Innengewinde 31 angeordnet, wobei die Länge der Gewindehülse 30 den jeweiligen Erfordernissen entsprechend bemessen ist. Diese Gewindehülse 30 aus Stahl erstreckt sich dabei mit einem Abschnitt 30a in den Hohlraum 60, so dass die Gewindehülse 30 mit ihrem oberen Abschnitt 30b aus dem Hohlraum 60 herausragt.

Das Einpressen des Blei-Materials 40 in den Hohlraum 60 der Hohlform 50 erfolgt mittels eines druckbeaufschlagten Pressstempels 70. Vermittels dieses Pressstempels 70 wird das Blei-Material z. B. in Form einer Pb-Platine 40 in den Hohlraum 60 der Hohlform 50 gepresst, wobei der Pressstempel 70 in Pfeilrichtung X gegen die Hohlform 50 bewegt wird (Fig. 10).

Die Menge des eingesetzten Blei-Materials 40 entspricht in etwa derjenigen Menge an Blei-Material, die für die Herstellung des Endpols 20 benötigt wird und von dem Hohlraum 60 der Hohlform 50 aufgenommen wird.

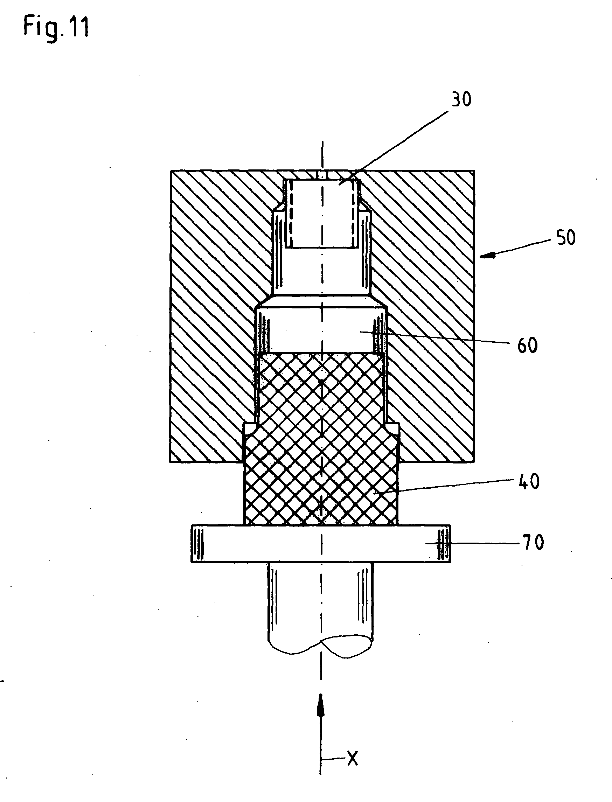

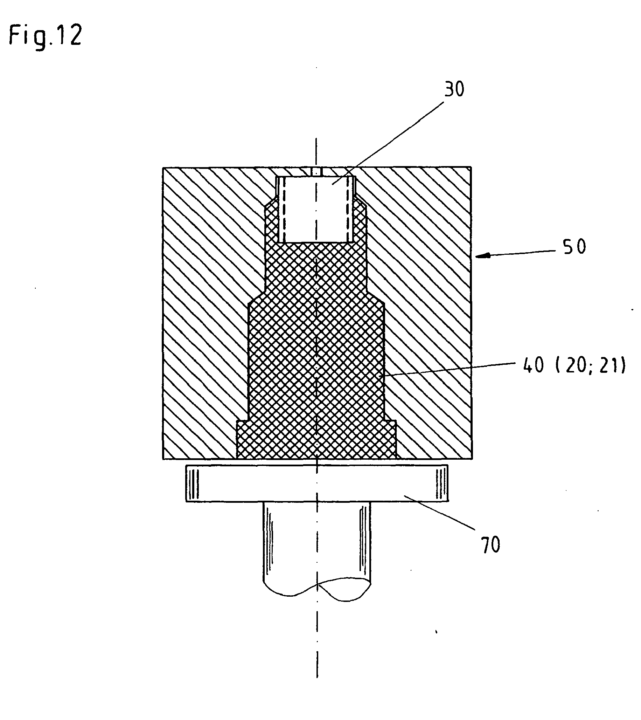

Bei einem Vorschub des Pressstempels 70 in Pfeilrichtung X wird das Blei-Material 40 in den Hohlraum 60 der Hohlform 50 gepresst (Fig. 11) bis der gesamte Hohlraum 60 mit dem Blei-Material ausgefüllt ist (Fig. 12), wobei dann gleichzeitig die Gewindehülse 30 homogen eingebunden wird in das Blei-Material des Formkörpers, der den Endpol 20 bildet. Das Einpressen des Blei-Materials in den Hohlraum 60 des Hohlraumes 50 erfolgt im Kaltpressverfahren, was jedoch nicht ausschließt, dass das eingesetzte Blei-Material vorgewärmt sein kann.

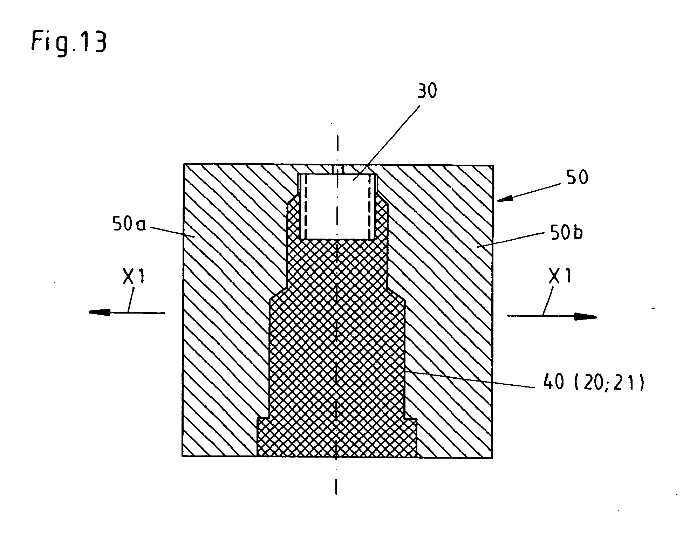

Ist der Herstellungsprozess beendet, dann werden die beiden Hohlformteile 50a, 50b in Pfeilrichtung X1 auseinander bewegt und das Fertigprodukt, hier der Endpol 20, erhalten (Fig. 13 und Fig. 2).

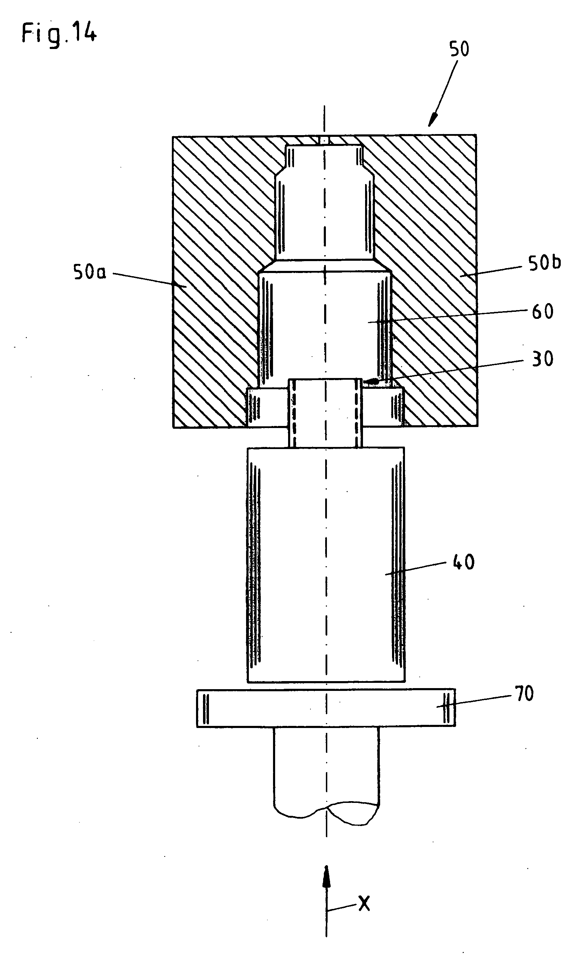

Gemäß Fig. 14 besteht die Möglichkeit, das Verfahren zum Herstellen von Endpolen derart vorzunehmen, dass über die bodenseitige Öffnung 61 des Hohlraumes 60 der Hohlform 50 das Blei-Material, z. B. eine Pb-Platine 40, in einer dem herzustellenden Formkörper entsprechenden Materialmenge vermittels eines druckbeaufschlagten Pressstempels zusammen mit einer ein Innengewinde 31 aufweisenden auf der Pb-Platine 40 aufsitzenden Gewindehülse 30 im Kaltpressverfahren bei gleichzeitiger homogener Einbindung der Gewindehülse in das Pb-Material des Formkörpers 21 gepresst wird. Nach diesem Verfahren erfolgt somit keine Anordnung der Gewindehülse 30 in den Hohlraum 60 der Hohlform 50 vor dem Einpressen des Blei-Materials in den Hohlraum 60, sondern die Gewindehülse 30 wird zusammen mit dem Blei-Material in den Hohlraum 60 gepresst. Auch bei dieser Verfahrensweise erfolgt eine homogene Einbindung der Gewindehülse 30 in das Blei-Material des Formkörpers 21 bzw. des Endpols 20 (Fig. 14).

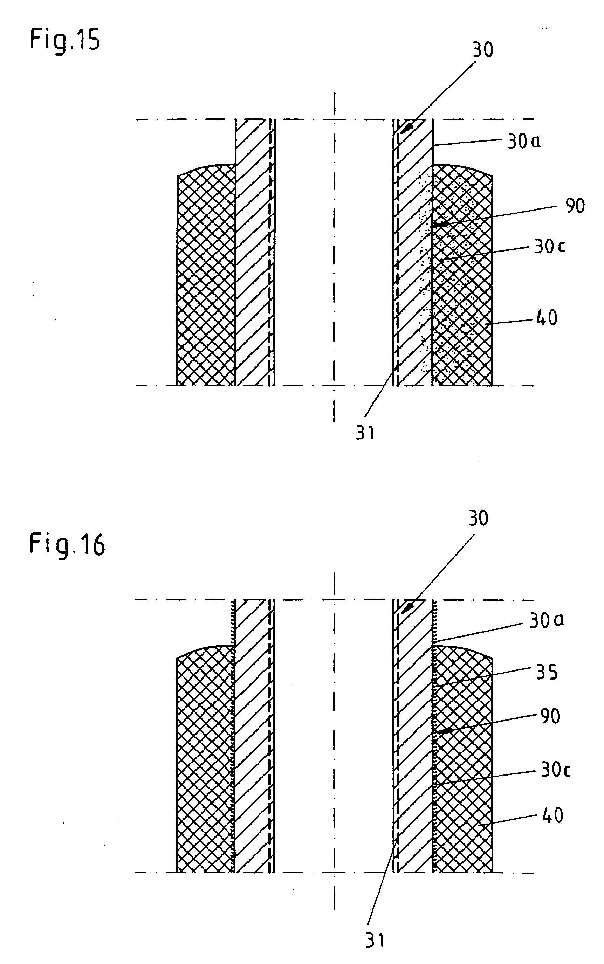

Fig. 15 zeigt schematisch die homogene Einbindung des Materials der Gewindehülse 30 in das Blei-Material 40 des Formkörpers 21 der den Endpol 20 bildet. Diese homogene Einbindung 90 im Außenwandbereich der Gewindehülse 30 ist bei 90 angedeutet.

Um diese homogene Einbindung 90 noch zu verstärken, kann nach einer weiteren Ausführungsform die Außenwandfläche 30c aufgerauht bzw. mit einem Rauhgrund 35 versehen sein, der beispielsweise als Außenwandprofilierung ausgebildet ist, so dass neben der homogenen Einbindung auch noch zusätzlich eine Materialverzahnung erfolgt (Fig. 16.)

## Patentansprüche

1. Endpol für den Anschluss elektrischer Polverbinder für Batterien, insbesondere leistungsstarke Akkumulatoren, stationäre Batterien u. dgl., bestehend aus einem in etwa zylindrischen Formkörper (21) aus Blei mit einendseitiger (21 b) Anformung (22) für die Befestigung von positiven oder negativen Platten (14, 15), **dadurch gekennzeichnet, dass** eine am anderen freien Formkörperende (21 a) angeordnete, mit einem Innengewinde (31) versehene, nach außen zeigende und offene sowie mit einem abgeschlossenen Ende versehene Hülse (30) aus Stahl vorgesehen ist, die bei der Herstellung des Formkörpers (21) im Kaltpressverfahren eines Blei-Materials, z. B. einer Pb-Platine (40), in einer Hohlform (50) homogen in das Material des geformten Formkörpers (21) eingebunden ist.

2. Endpol nach Anspruch 1,
**dadurch gekennzeichnet,**
**dass** der Formkörper (21) mit seiner homogen in das Blei-Material eingebundenen Gewindehülse (30) mit einem Kunststoffmantel (80) versehen ist.

3. Endpol nach einem der Ansprüche 1 und 2,
**dadurch gekennzeichnet,**
**dass** die Außenwandfläche (30c) der Gewindehülse (30) mit einer Aufrauhung (35) versehen ist.

## Claims

1. An end terminal for the connection of electrical terminal connectors for batteries, in particular powerful accumulators, stationary batteries and the like, consisting of an approximately cylindrical moulding (21) made of lead with an extension (22) located at one end (21b) for fixing positive or negative plates (14, 15), **characterized in that** there is provided a bush (30) made of steel, arranged at the other free end of the moulding (21a), provided with an internal thread (31), pointing outward, being open, and provided with a closed end, which is homogenously integrated into the material of the formed moulding (21) in a hollow mould (50) during the manufacture of the moulding (21) in a cold pressing process of a lead material, e.g. of a Pb circuit board (40).

2. The end terminal according to claim 1 **characterized in that** the moulding (21) with its threaded bush (30) homogenously integrated into the lead material is provided with a plastic coat (80).

3. The end terminal according to any one of claims 1 or 2, **characterized in that** the outer wall surface (30c) of the threaded bush (30) is provided with a roughening (35).

## Revendications

1. Pôle terminal pour le raccordement de connecteurs de pôles électriques pour des batteries, en particulier des accumulateurs de forte puissance, des batteries stationnaires ou similaires, consistant en un corps moulé (21) en plomb sensiblement cylindrique avec un surmoulage (22) à une extrémité pour la fixation de plaques positives ou négatives (14, 15), **caractérisé en ce qu'**il est prévu une douille (30) en acier disposée à l'autre extrémité libre (21a) du corps moulé, pourvue d'un filet femelle (31), faisant saillie vers l'extérieur, ouverte et présentant une extrémité fermée, laquelle est intégrée de manière homogène au matériau du corps moulé (21) lors de la fabrication dans un moule creux (50) du corps moulé (21) au moyen d'un procédé de moulage à froid d'un matériau en plomb tel qu'une platine en plomb (40).

2. Pôle terminal selon la revendication 1, **caractérisé en ce que** le corps moulé (21) et sa douille filetée (30) intégrée de manière homogène au matériau en plomb sont pourvus d'une gaine (80) en matière plastique.

3. Pôle terminal selon l'une des revendications 1 et 2, **caractérisé en ce que** la surface de paroi extérieure (30c) de la douille filetée (30) est pourvue d'une rugosité (35).
